# EUROPEAN PATENT SPECIFICATION

(11) **EP 2 682 533 B1**
(45) Date of publication and mention of the grant of the patent: **13.05.2015**
(21) Application number: 13174386.6
(22) Date of filing: 28.06.2013
(51) Int. Cl.: E03B 7/07, F16L 55/10

(54) **Gas supply system with an emergency device**
Gasversorgungssystem mit Notfallvorrichtung
Système d'alimentation en gaz et dispositif d'urgence

(30) Priority: 06.07.2012 NL 2009140
(43) Date of publication of application: 08.01.2014
(73) Proprietor: Pipelife Nederland B.V., 1601 MA Enkhuizen (NL)
(72) Inventor: Guitoneau, Hans Edward, 1613 DH Grootebroek (NL); Scucces, Marcel Roger, 1461 DM Zuidoostbeemster (NL)
(74) Representative: Nederlandsch Octrooibureau

(56) References cited:
- DE-U1- 20 003 606
- DE-U1- 20 201 819

## Description

The invention relates to a gas supply system situated between a gas take-off point, such as a gas meter, provided in a building, and a gas pipe accommodated underground, comprising a branch pipe piece connected to the gas pipe, a connection pipe piece fed into the building, and a pressure-relief valve which is in an open position in the at-rest state and which can be brought to the closed position when a predetermined nominal flow intensity and/or a predetermined nominal pressure difference across the pressure-relief valve is exceeded.

A gas supply system of this type is known and is used, for example, in individual house service connections. In this case, the gas flows with a certain flow rate and at a certain flow velocity out of the gas pipe via the pressure-relief valve and the branch pipe to the gas take-off unit. The pressure-relief valve is set in such a manner that normal gas supply can occur without interruptions. However, as soon as the flow velocity or the flow rate exceeds a predetermined threshold value for whatever reason, the valve closes. Such a case may arise in the event of a leak, for example. As the valve then closes, this prevents gas from flowing out, for example flowing into the residence and possibly being able to cause a fire or explosions. An example of a known system is disclosed in DE 200 03 606U1.

In the majority of cases, such a safety device per se functions as desired. Nevertheless, situations may arise in which the gas supply system is still intact, but it is desired to interrupt the gas supply. That may be the case, for example, if a fire has broken out in the house in question. The fire may have arisen entirely independently of the state of the gas supply system. However, this may still pose a risk to the gas supply system, since it may cause overheating or damage to gas pipes, for example, as a result of which gas may escape in such a way that the fire is further fuelled.

The object of the invention is therefore to design the gas supply system which is known per se and has a safety valve in such a way that these types of risks can also be avoided. This object is achieved by providing an emergency device which is provided with suction means for generating an underpressure in the gas pipe section between the gas take-off point and the pressure-relief valve, and sensor means for activating the suction means, which suction means are able to generate an underpressure of a magnitude such that the resultant flow intensity and/or the resultant pressure difference across the pressure-relief valve is greater than the predetermined nominal flow intensity and/or the predetermined nominal pressure difference across the pressure-relief valve and such that the pressure-relief valve closes under the influence of said flow intensity and/or said pressure difference.

The gas supply system according to the invention offers the possibility of closing the pressure-relief valve without it being necessary to operate the valve directly from the outside. The sharp increase in the flow intensity or the flow rate in the branch pipe causes the pressure-relief valve to close, such that the gas supply is interrupted. The pressure-relief valve remains closed under the influence of the gas pressure upstream of the valve, until the problem has been resolved and it is possible to generate a counterpressure in the branch pipe of a magnitude such that the pressure-relief valve opens. The gas can then flow once again in the normal manner. In the case of the pressure-relief valve which is known per se and has a small equalizing passage, the pressure downstream of the closed pressure-relief valve will slowly be restored, since gas is able to flow via the equalizing passage. In that case, the pressure-relief valve will open after some time, depending on the size of the equalizing passage, without the need to take further measures.

The suction means preferably comprise a suction device having an internal suction area, which suction area communicates with the gas pipe section between the pressure-relief valve and the gas take-off point and which suction area is transferrable between a relatively small starting volume and a relatively large end volume, prestressing means which interact with the suction device for maintaining a prestress on the suction device in the sense of increasing the volume of the suction area, and locking means which interact with the prestressing means for locking or releasing the prestressing means, which locking means interact with the sensor means.

The prestressing means make it possible to suddenly increase the size of the suction area, in such a way that a rapid increase in flow intensity and flow rate can be realized in a simple manner. This is effected by releasing the locking means, which in turn are operated by the sensor means.

The suction device may be configured in various ways. According to a first possibility, the suction device may comprise a piston/cylinder device, which piston/cylinder device comprises a cylinder having a first end wall which, together with the piston, defines a suction area, which piston is kept pressed under prestress in a starting position in the cylinder, wherein the releasable locking means are designed to lock the piston in the prestressed state or to release the piston and cause the piston to move under the influence of the prestress into an end position, in which position the distance to the first end wall is greater than the distance between the piston and the first end wall in the starting position, in order to enlarge the suction area.

In this case, a spring, such as a compression spring, may be provided between the end wall and the piston for supplying the prestress. The piston may be connected to a central pin which extends from the piston in the direction of the suction area. In order to stabilize said pin, it may be guided in guide means which are connected to the cylinder. In particular, the central pin may be displaceably guided to the outside through a second end wall of the cylinder, which second end wall is located at the side of the piston which is remote from the first end wall. The sensor means may interact with the central pin. In particular, the sensor means may comprise a cartridge fuse.

According to a second possibility, the suction device may comprise a chamber with a diaphragm, which diaphragm is kept pressed under prestress in a starting position with respect to the chamber, wherein the releasable locking means are designed to lock the diaphragm in the prestressed state or to release the diaphragm and cause the diaphragm to move under the influence of the prestress into an end position in order to enlarge the suction area.

As has already been mentioned, the emergency device may be located in a building. In this case, the connection pipe piece may open out into a T-shaped pipe piece which is connected at one side to the gas meter and which is connected at the other side to the emergency device. Such an arrangement may be located, for example, in the meter cupboard of a house.

The invention also relates to an emergency device for a gas supply system as described above, comprising a housing provided with a suction connection and with suction means for generating an underpressure, and sensor means for activating the suction means, which suction means are able to generate an underpressure at the suction connection, which suction means comprise a suction device having an internal suction area, which suction area communicates with the suction connection and which suction area is transferrable between a relatively small starting volume and a relatively large end volume, prestressing means which interact with the suction device for maintaining a prestress on the suction device in the sense of increasing the volume of the suction area, and locking means which interact with the prestressing means for locking or releasing the prestressing means, which locking means interact with the sensor means. The emergency device may comprise a piston/cylinder device; as an alternative, the emergency device may comprise a chamber with a diaphragm.

The invention will be explained in greater detail below with reference to the figures.
Figure 1 shows a gas supply system.
Figure 2 shows part of the gas supply system with a pressure-relief valve.

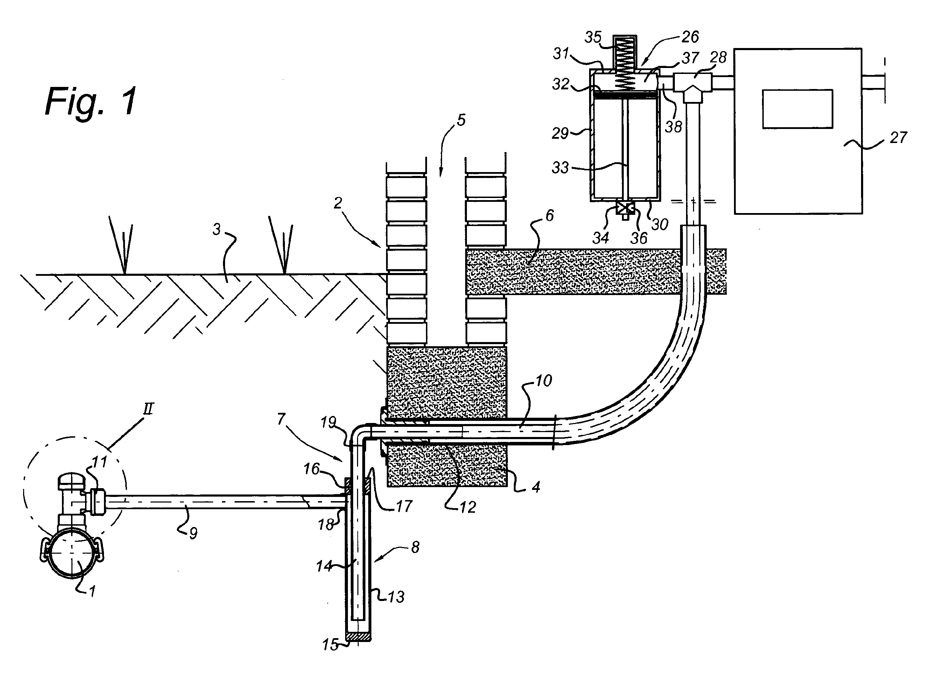

The gas supply system illustrated in Figure 1 is arranged between a main gas pipe 1 and a building 2. The main gas pipe 1 is accommodated underground 3. Only the foundations 4, the lower part of the wall 5 and the floor 6 of the building 2 are illustrated. The building 2 contains a gas take-off point, such as a gas meter 27.

A subsidence construction 7 is optionally provided, which in the illustrated example comprises the optional compensation means designated overall by 8, the branch pipe piece 9 and the connection pipe piece 10. The branch pipe piece 9 extends between the top piece 11 connected to the main gas pipe 1 and the compensation means 8, with the connection pipe piece 10 in turn extending between the compensation means 8 and the gas take-off point in the building. To this end, a bushing 12 is provided in the foundations, through which the connection pipe piece 10 extends.

The optional compensation means 8 comprises the external pipe piece or chamber 13 and the internal pipe piece 14 accommodated displaceably therein. The external pipe piece 13 is provided with a closing partition 15 at the lower end, with a gas-tight bushing 16 being provided at the upper end. The bushing 16 contains a sealing gasket 17, with respect to which the internal pipe piece 14 is displaceable in a sealing manner. The external pipe piece 13 further has a connection fitting 18 to which the branch pipe piece 9 is connected. The internal pipe piece 14 also has a connection fitting 19 at the upper end, to which the connection pipe piece 10 is connected.

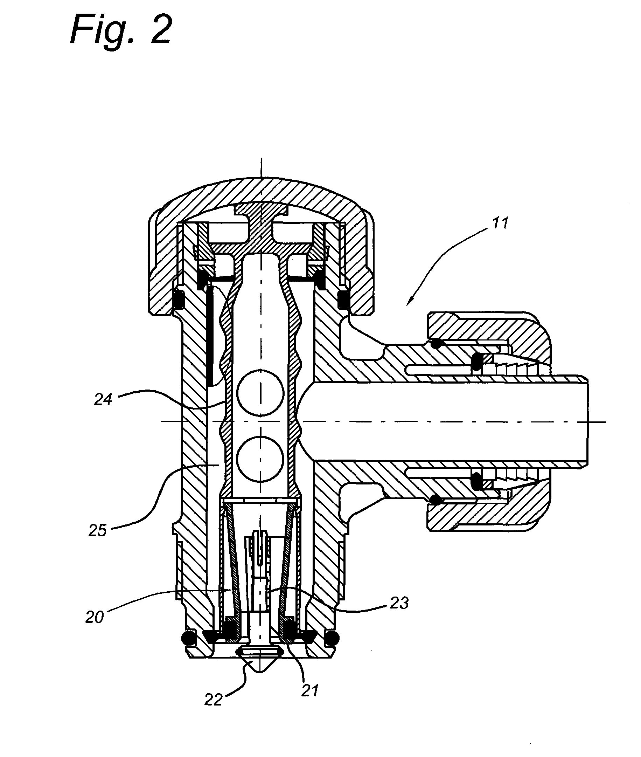

Figure 2 shows an example of a pressure-relief valve 20 which in this case is accommodated in the top piece 11. The pressure-relief valve 20 is suspended in the passage 25 of the top piece 11 by means of the open pipe piece 24. The valve body 22 is kept at a certain distance from the valve seat 21 under the influence of the compression spring 23. In this state, gas can flow in normal use from the main pipe 1 via the top piece 11 to the branch pipe 9. However, as soon as the flow of the gas exceeds a predetermined flow intensity or flow rate, the valve body 22 is pressed onto the valve seat 21 counter to the spring force, as a result of which the flow is interrupted. As a result of the drop in pressure downstream of the pressure-relief valve, the supply thus remains closed off. This has the advantage that in the case of a leak or damage to the pipe system downstream of the pressure-relief valve, a fire which might occur cannot be worsened by inflowing gas.

However, a certain amount of time is lost between the time when a fire breaks out in a house and the moment that the gas pipe becomes damaged and gas can escape. Gas is thus still able to escape for some time before the flow in the gas supply system reaches a magnitude such that the pressure-relief valve closes. This may still cause serious damage as the escaped gas may lead to explosions. In order to avoid this, the emergency device designated overall by 26 is provided. Said emergency device 26, together with the gas meter 27, is connected to the connection pipe piece 10 via the T-pipe piece 28, and is located in a meter cupboard, for example.

In the illustrated exemplary embodiment, the emergency device 26 comprises a cylinder 29 with end walls 30, 31 and a piston 32. The piston 32 is attached to the central pin 33 which is displaceably guided through an opening in the lower end wall 30. The pin is fixed against displacement there by means of locking means 34. A compression spring 35 which continuously attempts to push the piston 32 away from the upper end wall 31 presses from above against the piston 32 with the pin 33 attached thereto. However, under normal conditions this is counteracted by the locking means 34. A suction area 37 is defined between the piston 32, the upper end wall 31 and the part of the cylinder 29 located therebetween, said suction area 37 communicating with the T-pipe piece 28 and thus with the connection pipe piece 10 via the suction connection 38.

The locking means 34 are connected to a sensor 36, in this case a cartridge fuse. When such a cartridge fuse is subject to too high a temperature, for example as a result of fire, it releases the locking means 34. As a result, the pin 33 with the piston 32 can suddenly be pushed away from the upper wall 31 by means of the spring. This causes a sudden increase in the size of the suction area 37, resulting in an underpressure shockwave which propagates through the gas supply system. As soon as the associated underpressure reaches the pressure-relief valve, the valve closes under the influence of the higher flow velocity which arises. The supply of gas is thus closed off, so that a fire which may occur cannot be fuelled.

As an alternative, the central pin may be guided through the upper end wall 31, and the locking means and the sensor may also be located there. An embodiment is also possible in which the central pin is guided both through the upper end wall and through the lower end wall.

### List of reference numerals

- 1.: Main gas pipe
- 2.: Building
- 3.: Ground
- 4.: Foundations
- 5.: Wall
- 6.: Floor
- 7.: Subsidence construction
- 8.: Compensation means
- 9.: Branch pipe piece
- 10.: Connection pipe piece
- 11.: Top piece
- 12.: Bushing
- 13.: External pipe piece
- 14.: Internal pipe piece
- 15.: Sealing partition
- 16.: Passage
- 17.: Sealing gasket
- 18.: Connection fitting
- 19.: Connection fitting
- 20.: Pressure-relief valve
- 21.: Pressure-relief valve seat
- 22.: Pressure-relief valve body
- 23.: Pressure-relief valve compression spring
- 24.: Pipe piece
- 25.: Top piece passage
- 26.: Emergency device
- 27.: Gas meter
- 28.: T-pipe piece
- 29.: Cylinder
- 30.: Lower wall
- 31.: Upper wall
- 32.: Piston
- 33.: Central pin
- 34.: Locking means
- 35.: Compression spring
- 36.: Sensor
- 37.: Suction area
- 38.: Suction connection

## Claims

1. Gas supply system situated between a gas take-off point, such as a gas meter (27), provided in a building (2), and a gas pipe (1) accommodated underground (3), comprising a branch pipe piece (9) connected to the gas pipe, a connection pipe piece (10) fed into the building, and a pressure-relief valve (20) which is in an open position in the at-rest state and which can be brought to the closed position when a predetermined nominal flow intensity and/or a predetermined nominal pressure difference across the pressure-relief valve is exceeded, **characterized by** an emergency device (26) provided with suction means (29-32) for generating an underpressure in the gas pipe section between the gas take-off point (27) and the pressure-relief valve (20), and sensor means (36) for activating the suction means, which suction means (29-32) are able to generate an underpressure of a magnitude such that the resultant flow intensity and/or the resultant pressure difference across the pressure-relief valve (20) is greater than the predetermined nominal flow intensity and/or the predetermined nominal pressure difference across the pressure-relief valve and such that the pressure-relief valve closes under the influence of said flow intensity and/or said pressure difference.

2. Gas supply system according to Claim 1, wherein the suction means comprise a suction device (29-32) having an internal suction area (37), which suction area communicates with the gas pipe section between the pressure-relief valve (20) and the gas take-off point (27) and which suction area (37) is transferrable between a relatively small starting volume and a relatively large end volume, prestressing means (35) which interact with the suction device (29-32) for maintaining a prestress on the suction device in the sense of increasing the volume of the suction area, and locking means (34) which interact with the prestressing means (35) for locking or releasing the prestressing means, which locking means interact with the sensor means (36).

3. Gas supply system according to Claim 2, wherein the suction device comprises a piston/cylinder device (29-32), which piston/cylinder device comprises a cylinder (29) and a first end wall (31) which, together with the piston (32), defines a suction area (37), which piston (32) is kept pressed under prestress in a starting position in the cylinder (29), wherein the releasable locking means (34) are designed to lock the piston (32) in the prestressed state or to release the piston and cause the piston to move under the influence of the prestress into an end position, in which position the distance to the first end wall (31) is greater than the distance between the piston and the first end wall in the starting position, in order to enlarge the suction area (37).

4. Gas supply system according to Claim 3, wherein a spring (37), such as a compression spring, is provided between the first end wall (31) and the piston (32) for supplying the prestress.

5. Gas supply system according to one of Claims 2-4, wherein the piston (32) is connected to a central pin (33) which extends from the piston (32).

6. Gas supply system according to Claim 5, wherein the central pin (33) is guided in guide means (30) which are connected to the cylinder (29).

7. Gas supply system according to Claim 6, wherein the central pin (33) is displaceably guided to the outside through the first end wall (31) and/or through a second end wall (30) of the cylinder (29), which second end wall is located at the side of the piston (32) which is remote from the first end wall (31).

8. Gas supply system according to one of Claims 5-7, wherein the sensor means (36) interact with the central pin (33).

9. Gas supply system according to Claim 2, wherein the suction device comprises a chamber with a diaphragm, which diaphragm is kept pressed under prestress in a starting position with respect to the chamber, wherein the releasable locking means are designed to lock the diaphragm in the prestressed state or to release the diaphragm and cause the diaphragm to move under the influence of the prestress into an end position in order to enlarge the suction area.

10. Gas supply system according to one of the preceding claims, wherein the sensor means comprise a cartridge fuse.

11. Gas supply system according to one of the preceding claims, wherein the emergency device (26) is located in the building.

12. Gas supply system according to Claim 10, wherein the connection pipe piece (10) opens out into a T-shaped pipe piece (28) which is connected at one side to the gas meter (27) and which is connected at the other side to the emergency device (26).

13. Emergency device (26) for a gas supply system according to one of the preceding claims, comprising a housing (29-31) provided with a suction connection (38) and with suction means (29-32) for generating an underpressure, and sensor means (36) for activating the suction means, which suction means (29-32) are able to generate an underpressure at the suction connection (38), which suction means comprise a suction device (29-32) having an internal suction area (37), which suction area communicates with the suction connection and which suction area (37) is transferrable between a relatively small starting volume and a relatively large end volume, prestressing means (35) which interact with the suction device (29-32) for maintaining a prestress on the suction device in the sense of increasing the volume of the suction area, and locking means (34) which interact with the prestressing means (35) for locking or releasing the prestressing means, which locking means interact with the sensor means (36).

14. Emergency device (26) according to Claim 13, wherein the suction means comprise a piston/cylinder device (29-32).

15. Emergency device according to Claim 13, wherein the suction means comprise a chamber with a diaphragm.

## Patentansprüche

1. Gaszuführsystem, das sich zwischen einem Gasabnahmepunkt, wie zum Beispiel einem Gaszähler (27), der in einem Gebäude (2) vorgesehen ist, und einer Gasleitung (1) befindet, die unter der Erde (3) untergebracht ist, welches ein Abzweigleitungsstück (9), das mit der Gasleitung verbunden ist, ein Verbindungsleitungsstück (10), das in das Gebäude zugeführt wird, und ein Druckentlastungsventil (20) aufweist, das in einer offenen Position in dem Ruhezustand ist und das in die geschlossene Position gebracht werden kann, wenn eine vorbestimmte nominale Strömungsintensität und/oder eine vorbestimmte nominale Druckdifferenz über das Druckentlastungsventil überschritten wird, **gekennzeichnet durch** eine Notfallvorrichtung (26), die mit einer Saugeinrichtung (29, 32) zum Erzeugen eines Unterdrucks in dem Gasleitungsabschnitt zwischen dem Gasabnahmepunkt (27) und dem Druckentlastungsventil (20) und einer Sensoreinrichtung (36) zum Aktivieren der Saugeinrichtung versehen ist, wobei die Saugeinrichtung (29-32) in der Lage ist, einen Unterdruck einer Magnitude derart zu erzeugen, dass die resultierende Strömungsintensität und/oder die resultierende Druckdifferenz über das Druckentlastungsventil (20) größer als die vorbestimmte nominale Strömungsintensität und/oder die vorbestimmte nominale Druckdifferenz über das Druckentlastungsventil ist, und derart, dass das Druckentlastungsventil unter dem Einfluss der Strömungsintensität und/oder der Druckdifferenz schließt.

2. Gaszuführsystem nach Anspruch 1, wobei die Saugeinrichtung eine Saugvorrichtung (29-32) mit einem internen Saugbereich (37), welcher Saugbereich mit dem Gasleitungsabschnitt zwischen dem Druckentlastungsventil (20) und dem Gasabnahmepunkt (27) in Verbindung steht und welcher Saugbereich (37) zwischen einem relativ kleinen Startvolumen und einem relativ großen Endvolumen transferierbar ist, eine Vorspanneinrichtung (35), die mit der Saugvorrichtung (29-32) interagiert, zum Beibehalten einer Vorspannung auf der Saugvorrichtung in dem Sinne eines Erhöhens des Volumens des Saugbereichs, und eine Sperreinrichtung (34) aufweist, die mit der Vorspanneinrichtung (35) interagiert, zum Sperren oder Lösen der Vorspanneinrichtung, welche Sperreinrichtung mit der Sensoreinrichtung (36) interagiert.

3. Gaszuführsystem nach Anspruch 2, wobei die Saugvorrichtung eine Kolben-/Zylinder-Vorrichtung (29-32) aufweist, welche Kolben-/Zylinder-Vorrichtung einen Zylinder (29) und eine erste Endwand (31) aufweist, welche zusammen mit dem Kolben (32) einen Saugbereich (37) definiert, welcher Kolben (32) unter einer Vorspannung in einer Startposition in dem Zylinder (29) gedrückt gehalten wird, wobei die lösbare Sperreinrichtung (34) gestaltet ist, um den Kolben (32) in dem vorgespannten Zustand zu sperren oder den Kolben zu lösen und den Kolben zu veranlassen, sich unter dem Einfluss der Vorspannung in eine Endposition zu bewegen, in welcher Position der Abstand zu der ersten Endwand (31) größer als der Abstand zwischen dem Kolben und der ersten Endwand in der Startposition ist, um den Saugbereich (37) zu vergrößern.

4. Gaszuführsystem nach Anspruch 3, wobei eine Feder (37), wie zum Beispiel eine Kompressionsfeder, zwischen der ersten Endwand (31) und dem Kolben (32) zum Zuführen der Vorspannung vorgesehen ist.

5. Gaszuführsystem nach einem der Ansprüche 2 bis 4, wobei der Kolben (32) mit einem zentralen Stift (33) verbunden ist, der sich von dem Kolben (32) aus erstreckt.

6. Gaszuführsystem nach Anspruch 5, wobei der zentrale Stift (33) in einer Führungseinrichtung (33) geführt ist, die mit dem Zylinder (29) verbunden ist.

7. Gaszuführsystem nach Anspruch 6, wobei der zentrale Stift (33) durch die erste Endwand (31) und/oder durch eine zweite Endwand (30) des Zylinders (29) zu der Außenseite hin verschiebbar geführt ist, welche zweite Endwand sich an der Seite des Kolbens (32) befindet, welcher von der ersten Endwand (31) entfernt ist.

8. Gaszuführsystem nach einem der Ansprüche 5 bis 7, wobei die Sensoreinrichtung (37) mit dem zentralen Stift (33) interagiert.

9. Gaszuführsystem nach Anspruch 2, wobei die Saugvorrichtung eine Kammer mit einer Membran aufweist, welche Membran in einer Startposition hinsichtlich der Kammer unter einer Vorspannung gedrückt gehalten wird, wobei die lösbare Sperreinrichtung gestaltet ist, um die Membran in dem vorgespannten Zustand zu sperren oder um die Membran zu lösen und die Membran zu veranlassen, sich unter dem Einfluss der Vorspannung in eine Endposition zu bewegen, um den Saugbereich zu vergrößern.

10. Gaszuführsystem nach einem der vorangehenden Ansprüche, wobei die Sensoreinrichtung eine Patronensicherung aufweist.

11. Gaszuführsystem nach einem der vorangehenden Ansprüche, wobei sich die Notfallvorrichtung (26) in dem Gebäude befindet.

12. Gaszuführsystem nach Anspruch 10, wobei das Verbindungsleitungsstück (10) in ein T-förmiges Leitungsstück (28) mündet, das an einer Seite mit dem Gaszähler (27) verbunden ist und das an der anderen Seite mit der Notfallvorrichtung (26) verbunden ist.

13. Notfallvorrichtung (26) für ein Gaszuführsystem nach einem der vorangehenden Ansprüche, mit einem Gehäuse (29-31), das mit einer Saugverbindung (38) und mit einer Saugeinrichtung (29-32) zum Erzeugen eines Unterdrucks versehen ist, und einer Sensoreinrichtung (36) zum Aktivieren der Saugeinrichtung, welche Saugeinrichtung (29-32) in der Lage ist, einen Unterdruck an der Saugverbindung (38) zu erzeugen, wobei die Saugeinrichtung eine Saugvorrichtung (29-32) mit einem internen Saugbereich (37), welcher Saugbereich mit der Saugverbindung kommuniziert und welcher Saugbereich (37) zwischen einem relativ kleinen Startvolumen und einem relativ großen Endvolumen transferierbar ist, eine Vorspannungseinrichtung (35), die mit der Saugvorrichtung (29-32) zum Beibehalten einer Vorspannung an der Saugvorrichtung in dem Sinne eines Erhöhens des Volumens des Saugbereichs interagiert, und eine Sperreinrichtung (34) aufweist, die mit der Vorspanneinrichtung (35) zum Sperren oder Lösen der Vorspanneinrichtung interagiert, welche Sperreinrichtung mit der Sensoreinrichtung (36) interagiert.

14. Notfallvorrichtung (26) nach Anspruch 13, wobei die Saugeinrichtung eine Kolben-/Zylinder-Vorrichtung (29-32) aufweist.

15. Notfallvorrichtung nach Anspruch 13, wobei die Saugeinrichtung eine Kammer mit einer Membran aufweist.

## Revendications

1. Système d'alimentation de gaz situé entre un point de prélèvement de gaz, tel qu'un compteur à gaz (27), agencé dans un immeuble (2), et un tuyau de gaz (1) reçu dans le sol (3), comprenant une partie de tuyau de ramification (9) reliée au tuyau de gaz, une partie de tuyau de liaison (10) acheminée dans l'immeuble, et une soupape de sécurité (20) qui est dans une position ouverte dans l'état au repos et qui peut être amenée dans la position fermée lorsqu'une intensité d'écoulement nominal prédéterminée et/ou une différence de pression nominale prédéterminée à travers la valve de sécurité est dépassée, **caractérisé par** un dispositif d'urgence (26) muni de moyens d'aspiration (29 à 32) pour produire une dépression dans le tronçon de tuyau de gaz entre le point de prélèvement de gaz (27) et la soupape de sécurité (20), et des moyens de capteur (36) pour activer les moyens d'aspiration, lesquels moyens d'aspiration (29 à 32) sont capables de produire une dépression ayant une amplitude telle que l'intensité d'écoulement résultante et/ou la différence de pression résultante à travers la soupape de sécurité (20) est plus grande que l'intensité d'écoulement nominal prédéterminée et/ou la différence de pression nominale prédéterminée à travers la soupape de sécurité et telle que la soupape de sécurité se ferme sous l'influence de l'intensité d'écoulement et/ou la différence de pression.

2. Système d'alimentation selon la revendication 1, dans lequel les moyens d'aspiration comprennent un dispositif d'aspiration (29 à 32) ayant une zone d'aspiration interne (37), laquelle zone d'aspiration communique avec le tronçon de tuyau de gaz entre la soupape de sécurité (20) et le point de prélèvement de gaz (27) et laquelle zone d'aspiration (37) peut être transférée entre un volume de départ relativement petit et un volume de fin relativement grand, des moyens de précontrainte (35) qui interagissent avec le dispositif d'aspiration (29 à 32) pour maintenir une précontrainte sur le dispositif d'aspiration dans le sens d'une augmentation du volume de la zone d'aspiration, et des moyens de blocage (34) qui interagissent avec les moyens de précontrainte (35) pour bloquer ou libérer les moyens de précontrainte, lesquels moyens de blocage interagissent avec les moyens de capteur (36).

3. Système d'alimentation de gaz selon la revendication 2, dans lequel le dispositif d'aspiration comprend un dispositif à piston/cylindre (29 à 32), lequel dispositif à piston/cylindre comprend un cylindre (29) et une première paroi d'extrémité (31) qui, associée au piston (32), définit une zone d'aspiration (37), lequel piston (32) est maintenu poussé sous une précontrainte dans une position de départ dans le cylindre (29), dans lequel les moyens de blocage libérable (34) sont conçus pour bloquer le piston (32) dans l'état précontraint ou pour relâcher le piston et amener le piston à se déplacer sous l'influence des précontraintes dans une position de fin, position dans laquelle la distance jusqu'à la première paroi d'extrémité (31) est plus grande que la distance entre le piston et la première paroi d'extrémité dans la position de départ, afin d'agrandir la zone d'aspiration (37).

4. Système d'alimentation de gaz selon la revendication 3, dans lequel un ressort (37), tel qu'un ressort de compression, est agencé entre la première paroi d'extrémité (31) et le piston (32) pour fournir la précontrainte.

5. Système d'alimentation de gaz selon l'une quelconque des revendications 2 à 4, dans lequel le piston (32) est relié à une tige centrale (33) qui s'étend à partir du piston (32).

6. Système d'alimentation de gaz selon la revendication 5, dans lequel la tige centrale (33) est guidée dans des moyens de guidage (30) qui sont reliés au cylindre (29).

7. Système d'alimentation de gaz selon la revendication 6, dans lequel la tige centrale (33) est guidée de manière à se déplacer vers l'extérieur à travers la première paroi d'extrémité (31) et/ou à travers une seconde paroi d'extrémité (30) du cylindre (29), laquelle seconde paroi d'extrémité est située au niveau du côté du piston (32) qui est éloigné de la première paroi d'extrémité (31).

8. Système d'alimentation de gaz selon l'une quelconque des revendications 5 à 7, dans lequel les moyens de capteur (36) interagissent avec la tige centrale (33).

9. Système d'alimentation de gaz selon la revendication 2, dans lequel le dispositif d'aspiration comprend une chambre ayant une membrane, laquelle membrane est maintenue poussée sous la précontrainte dans une position de départ par rapport à la chambre, dans lequel les moyens de blocage libérable sont conçus pour bloquer la membrane dans l'état précontraint ou pour libérer la membrane et amener la membrane à se déplacer sous l'influence de la précontrainte jusqu'à une position de fin afin d'agrandir la zone d'aspiration.

10. Système d'alimentation de gaz selon l'une quelconque des revendications précédentes, dans lequel les moyens de capteur comprennent un fusible à cartouche.

11. Système d'alimentation de gaz selon l'une quelconque des revendications précédentes, dans lequel le dispositif d'urgence (26) est situé dans l'immeuble.

12. Système d'alimentation de gaz selon la revendication 10, dans lequel la partie de tuyau de liaison (10) s'ouvre dans une partie de tuyau en forme de T (28) qui est reliée au niveau d'un côté au compteur de gaz (27) et qui est reliée au niveau de l'autre côté au dispositif d'urgence (26).

13. Dispositif d'urgence (26) pour système d'alimentation de gaz selon l'une quelconque des revendications précédentes, comprenant un boîtier (29 à 31) muni d'une liaison d'aspiration (38) et de moyens d'aspiration (29 à 32) pour produire une dépression, et des moyens de capteur (36) pour activer les moyens d'aspiration, lesquels moyens d'aspiration (29 à 32) sont capables de produire une dépression au niveau de la liaison d'aspiration (38), lesquels moyens d'aspiration comprennent un dispositif d'aspiration (29 à 32) ayant une zone d'aspiration interne (37), laquelle zone d'aspiration communique avec la liaison d'aspiration et laquelle zone d'aspiration (37) peut être transférée entre un volume de départ relativement petit et un volume de fin relativement grand, des moyens de précontrainte (35) qui interagissent avec le dispositif d'aspiration (29 à 32) pour maintenir une précontrainte sur le dispositif d'aspiration dans le sens d'une augmentation du volume de la zone d'aspiration, et des moyens de blocage (34) qui interagissent avec les moyens de précontrainte (35) pour bloquer ou libérer les moyens de précontrainte, lesquels moyens de blocage interagissent avec les moyens de capteur (36).

14. Dispositif d'urgence (26) selon la revendication 13, dans lequel les moyens d'aspiration comprennent un dispositif à piston/cylindre (29 à 32).

15. Dispositif d'urgence selon la revendication 13, dans lequel les moyens d'aspiration comprennent une chambre ayant une membrane.
